# EUROPEAN PATENT SPECIFICATION

(11) **EP 2 318 460 B1**
(45) Date of publication and mention of the grant of the patent: **27.11.2013**
(21) Application number: 09807273.9
(22) Date of filing: 13.08.2009
(51) Int. Cl.: C08L 77/02, C08L 77/00, C08K 5/02, D01F 6/60, D06G 1/00, C08K 3/00, D01F 1/07, D06N 7/00

(54) **FLAME RETARDANT POLYMER COMPOSITES, FIBERS, CARPETS, AND METHODS OF MAKING EACH**
FLAMMHEMMENDE POLYMERVERBUNDSTOFFE, FASERSTOFFE, TEPPICHE UND HERSTELLUNGSVERFAHREN FÜR DIESE
COMPOSITES POLYMÈRES, FIBRES, ET TAPIS IGNIFUGEANTS, ET PROCÉDÉS DE FABRICATION DE CHACUN

(30) Priority: 15.08.2008 US 89240 P
(43) Date of publication of application: 11.05.2011
(73) Proprietor: Invista Technologies S.à.r.l., 9000 St. Gallen (CH)
(72) Inventor: AGARWAL, Nirmal, Kumar, Columbia SC 29229 (US); WILLIAMS, Franklin, Pierce, Camden SC 29020 (US); BAUMANN, Markus, 69168 Wiesloch (DE)
(74) Representative: Cockerton, Bruce Roger
(86) International application number: PCT/US2009/053658
(87) International publication number: WO 2010/019746

(56) References cited:
- EP-A1- 1 388 611
- WO-A2-2009/061989
- US-A1- 2004 137 227
- US-A1- 2005 197 440
- US-A1- 2006 089 444
- US-A1- 2007 212 963
- US-A1- 2008 023 679
- US-B1- 6 610 770

## Description

### FIELD OF THE DISCLOSURE

The present disclosure relates to flame retardant polymer composites, processes for the preparation of the polymer composite, and application of the polymer composites in fibers and fabrics.

### BACKGROUND

In general, carpets have to meet fire protection requirements. The requirement applies to the carpet floor coverings both in public buildings and in public means of transportation, such as railways, cruise ships, ferries, coaches, and airplanes. In particular, carpets in airplanes have to meet Federal Aviation Regulation standard FAR 25.853b (vertical flame test) in the United States or similar regulations in the rest of the world. In addition, carpets have to meet smoke and toxic gases requirements in Europe and Asia Pacific.

Wool carpet has been used as aircraft carpet for its fire retardant properties. However, wool carpet is not desirable because it has poor wear characteristics resulting and must be replaced often. In addition, wool carpets must be heavy to give even acceptable wear, which cause higher aircraft fuel consumption versus lower weight carpets,

There exists a need in the industry to provide carpets that meet the regulations in the United States and/or the rest of the world and are lighter than incumbent wool carpets.

EP-A-1388611 discloses a sound-proof wall made of fiber reinforced plastic.

### DETAILED DESCRIPTION

Before the present disclosure is described in greater detail, it is to be understood that this disclosure is not limited to particular embodiments described, and as such may, of course, vary. It is also to be understood that the terminology used herein is for the purpose of describing particular embodiments only, and is not intended to be limiting, since the scope of the present disclosure will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, the preferred methods and materials are now described.

The citation of any publication is for its disclosure prior to the filing date and should not be construed as an admission that the present disclosure is not entitled to antedate such publication by virtue of prior disclosure. Further, the dates of publication provided could be different from the actual publication dates that may need to be independently confirmed.

As will be apparent to those of skill in the art upon reading this disclosure, each of the individual embodiments described and illustrated herein has discrete components and features which may be readily separated from or combined with the features of any of the other several embodiments without departing from the scope or spirit of the present disclosure. Any recited method can be carried out in the order of events recited or in any other order that is logically possible.

Embodiments of the present disclosure will employ, unless otherwise indicated, fibers, textiles, carpets, and the like, which are within the skill of the art.

The following examples are put forth so as to provide those of ordinary skill in the art with a complete disclosure and description of how to perform the methods and use the probes disclosed and claimed herein. Efforts have been made to ensure accuracy with respect to numbers (e.g., amounts, temperature, etc.), but some errors and deviations should be accounted for. Unless indicated otherwise, parts are parts by weight, temperature is in °C, and pressure is at or near atmospheric. Standard temperature and pressure are defined as 25 °C and 1 atmosphere.

Before the embodiments of the present disclosure are described in detail, it is to be understood that, unless otherwise indicated, the present disclosure is not limited to particular materials, reagents, reaction materials, manufacturing processes, or the like, as such can vary. It is also to be understood that the terminology used herein is for purposes of describing particular embodiments only, and is not intended to be limiting. It is also possible in the present disclosure that steps can be executed in different sequence where this is logically possible.

It must be noted that, as used in the specification and the appended claims, the singular forms "a," "an," and "the" include plural referents unless the context clearly dictates otherwise. Thus, for example, reference to "a compound" includes a plurality of compounds. In this specification and in the claims that follow, reference will be made to a number of terms that shall be defined to have the following meanings unless a contrary intention is apparent.

### Definitions

As used herein, the term "fiber" refers to filamentous material that can be used in fabric and yarn as well as textile fabrication. One or more fibers can be used to produce a fabric or yarn. The yarn can be fully drawn or textured according to methods known in the art. In an embodiment, the face fibers can include bulked continuous filament (BCF) or staple fibers for tufted or woven carpets.

As used herein, the term "fibrous substrate" includes, but is not limited to, textiles, carpets, apparel, furniture coverings, drapes, upholstery, bedding, automotive seat covers, and the like, that include fibers or yarns. In particular, fibrous substrates can include air-craft fibrous substrates such as air-craft textiles, air-craft carpets, air-craft seat covering, and the like. It should be noted that embodiments of the present disclosure can include fibrous substrates that are non-woven fabrics or needle felt.

As used herein, the term "carpet" may refer to a structure including face fiber and a backing. A primary backing may have a yarn tufted through the primary backing. The underside of the primary backing can include one or more layers of material (e.g., coating layer, a secondary backing, and the like) to cover the backstitches of the yarn. In general, a tufted carpet includes a pile yarn, a primary backing, a lock coat, and a secondary backing. In general, a woven carpet includes a pile yarn, a warp, and weft skeleton onto which the pile yarn is woven, and a backing. Embodiments of the carpet can include woven, nonwovens, and needle felts. A needle felt can include a backing with fibers attached as a non-woven sheet. A non-woven covering can include backing and a face side of different or similar materials.

As used herein, the term "primary backing" and/or the "secondary backing layer" may refer to woven or non-woven materials. The woven materials may be natural materials or synthetic materials. The woven materials can include, but are not limited to, cotton, rayon, jute, wool, polyolefins (e.g., polypropylene and polyethylene), polyester, coated fiberglass, pyrolized polypropylene, and/or polyamide. The non-woven materials can include fibers such as, but not limited to, polypropylene, rayon, polyethylene, polyester, polyamide, and combinations thereof, blends thereof, and the like.

As used herein, the term "backing" refers to the primary backing, secondary backing, coating layer, combinations thereof, and the like.

The term "lockcoat" refers to a coating disposed on the backside of a carpet to lock in fibers. Lockcoats can be modified with materials and additives to allow self-extinguishment of a vertically burning carpet piece fast enough to pass the vertical burn test. In an embodiment, ethylene vinyl acetate (EVA) is used for aircraft carpet lockcoats since it tends to smoke less than SBR latex, the latter of which is common in the rest of the carpet industry. These modifications can include mixing chemicals into the lockcoat such as Alumina TriHydrate (ATH), Red Phosphorous, or other flame retardants. While these allow passing of the afterflaming time, which requires self-extinguishment within a maximum period of time after being ignited, smoke and toxicity tests, both burning and smoldering, are difficult to pass with nylon 66 face fiber.

The term "flame retardant" is defined as not susceptible to combustion to the point of propagating a flame, beyond safe limits, after the ignition source is removed.

The term "flame-retardant carpet" is used herein to mean that the carpet self-extinguishes under carefully controlled conditions after being ignited.

One method of testing flame-retardant carpet is referred to as "FAA Vertical Burn Test" described in FAR 25.853 Appendix F, Part 1, 12 Seconds, which is available from Federal Aviation Association. For floor covering, FAA requires that the average burn length may not exceed 8 inches, and the average flame time after removal of the flame source may not exceed 15 seconds. In addition, dripping from the test sample may not continue to flame for more than an average of 5 seconds after falling.

### Discussion

The present invention provides a flame retardant composite, a flame retardant nylon fiber or a flame retardant nylon fiber carpet, comprising, or consisting essentially of: a polyamide, an organoclay composition, and an inorganic bromine compound; wherein the polyamide is one or more nylons selected from the group consisting of: nylon 4/6, nylon 6, nylon 6/6, nylon 6/9, nylon 6/10, nylon 6/12, nylon 11, and nylon 12.

Embodiments of the present disclosure include flame retardant composites, flame retardant fibers, flame retardant fiber carpets, methods of making each, and the like. In addition, embodiments of the present disclosure include fibrous substrates that are made from the flame retardant composites and/or the flame retardant fibers. Embodiments of the present disclosure include flame retardant composites that can be used to make flame retardant composites fibers and flame retardant fiber carpets.

Embodiments of the present disclosure can be created using fiber forming polymers. Fiber forming polymers described herein include, but are not limited to, polyamides, polyesters, poly lactic acid (PLA), polypropylene (PP), acrylics, and the like.

Embodiments of the present disclosure include flame retardant composites, flame retardant nylon fibers, flame retardant nylon fiber carpets, methods of making each, and the like. Embodiments of the present disclosure include flame retardant composites that can be used to make flame retardant composite nylon fibers and flame retardant nylon fiber carpets.

Embodiments of the present disclosure include, but are not limited to, bulked continuous fibers or stable fibers that are flame retardant so that embodiments of the present disclosure can meet the requirement of the vertical flame test, while also meeting the requirement of smoke and toxic gas emissions.

Embodiments of the present disclosure are advantageous for at least the reason that embodiments of the present disclosure have better wear characteristics than wool carpet. In addition, relative to wool carpet, embodiments of the present disclosure have a longer life. Furthermore, lighter weights of embodiments of the present disclosure can be used relative to wool carpet, which can reduce fuel costs.

As mentioned above, embodiments of the present disclosure include flame retardant composites that include one or more polyamide polymers, an organoclay, and an inorganic bromine compound. Additional details regarding the one or more polyamide polymers, the organoclay, and the inorganic bromine compound are described below. In an embodiment, the flame retardant composite can include zinc borate (for example, Zn₃(BO₃)₂). In an embodiment, the flame retardant composite can include nylon 6. Additional components can be used in embodiments of the flame retardant composite and these include one or more of the following: dyes, permanent or semi-permanent hydrophilic treatments or finishes, adhesion promoters, anti-statics, antioxidants, antimicrobials, delustrants (e.g., titanium dioxide), light stabilizers, polymerization catalysts, matting agents, organic phosphates, light stabilizers, heat stabilizers, stain-blockers, reinforcing or non-reinforcing fillers, pigments, tougheners, different yarn cross-sections, and combinations thereof.

In another embodiment, the flame retardant composite consists essentially of one or more polyamide polymers (or components to make the one or more polyamide polymers), an organoclay, and an inorganic bromine compound. In an embodiment, the flame retardant composites can also include zinc borate (e.g., Zn₃(BO₃)₂). In an embodiment, the flame retardant composite can include nylon 6. In an embodiment, the flame retardant composites can also include zinc borate (*e*.*g*., Zn₃(BO₃)₂) and nylon 6. Components that do not substantially impact or impact the flame retardant characteristics or the smoke characteristics of the flame retardant composite can be used in the flame retardant composite. For example, dyes, permanent or semi-permanent hydrophilic treatments or finishes, adhesion promoters, anti-statics, antioxidants, antimicrobials, delustrants (*e*.*g*., titanium dioxide), light stabilizers, polymerization catalysts, matting agents, organic phosphates, light stabilizers, heat stabilizers, stain-blockers, reinforcing or non-reinforcing fillers, pigments, tougheners, different yarn cross-sections, and combinations thereof, can be used in the flame retardant composite of this embodiment.

In another embodiment, the present disclosure includes flame retardant nylon fibers that include one or more polyamide polymers, an organoclay, and an inorganic bromine compound. In an embodiment, the flame retardant nylon fiber can be made from the flame retardant composite. In an embodiment, the flame retardant nylon fibers can include zinc borate (*e*.*g*., Zn₃(BO₃)₂). In an embodiment, the flame retardant composite can include nylon 6. Additional details regarding the one or more polyamide polymers, the organoclay, and the inorganic bromine compound are described below.

In another embodiment, the flame retardant nylon fiber consists essentially of one or more polyamide polymers (or components to make the one or more polyamide polymers), an organoclay, and an inorganic bromine compound. In an embodiment, the flame retardant nylon fibers can also include zinc borate (*e*.*g*., Zn₃(BO₃)₂). In an embodiment, the flame retardant composite can include nylon 6. In an embodiment, the flame retardant composites can also include zinc borate (*e*.*g*., Zn₃(BO₃)₂) and nylon 6. Components, such as those noted above, that do not substantially impact or impact the flame retardant characteristics or the smoke characteristics of the flame retardant nylon fiber can be used in the flame retardant composite.

In another embodiment, the present disclosure includes flame retardant nylon fiber carpets that include one or more polyamide polymers, an organoclay, and an inorganic bromine compound. In an embodiment, the flame retardant nylon fiber carpets can include zinc borate (*e*.*g*., Zn₃(BO₃)₂). In an embodiment, the flame retardant composite can include nylon 6. In particular, embodiments of the flame retardant nylon fiber carpets include flame retardant nylon fibers of the present disclosure. In an embodiment, the flame retardant nylon fiber can be made from the flame retardant composite. Additional details regarding the one or more polyamide polymers, the organoclay, and the inorganic bromine compound are described below.

In another embodiment, the flame retardant nylon fiber carpet consists essentially of one or more polyamide polymers (or components to make the one or more polyamide polymers), an organoclay, and an inorganic bromine compound. In an embodiment, the flame retardant nylon fiber carpets can also include zinc borate (*e.g*., Zn₃(BO₃)₂). In an embodiment, the flame retardant composites can also include zinc borate (*e*.*g*., Zn₃(BO₃)₂) and nylon 6. In an embodiment, the flame retardant composite can include nylon 6. In particular, embodiments of the flame retardant nylon fiber carpets include flame retardant nylon fibers of the present disclosure. In an embodiment, the flame retardant nylon fiber can be made from the flame retardant composite. Components, such as those noted above, that do not substantially impact or impact the flame retardant characteristics or the smoke characteristics of the flame retardant nylon fiber can be used in the flame retardant nylon fiber carpet.

In each of the embodiments noted above, the polyamide can include nylon 6/6. In each of the embodiments noted above, the polyamide can include nylon 6/6 and nylon 6.

It should be noted that inclusion of nylon 6 can enhance the flame retardant and/or smoke characteristics of embodiments of the present disclosure. Typically, nylon 6 is not is not used as a base or majority polymer because when nylon 6 burns it degrades to a monomer that is highly flammable (See, Encyclopedia of Polymer Science and Engineering, chapter on "FLAMMABILITY"), thus, nylon 6 is disfavored for flame-resistant applications. Nylon 6 is typically not used in aircraft carpet manufacture. Nylon 66 has a more complex pyrolysis reaction pathway that may fractionally retard the pyrolysis rate of reaction. Richard Lyons of the FAA has published a chart showing that N6 burns a higher heat release capacity than Nylon 66. Therefore, the preferred face fiber base polymer for aircraft carpets is Nylon 66.

A surprising result is that the addition of certain amounts of nylon 6 to embodiments of the present disclosure improves the flame retardant and smoke characteristics of embodiments of the present disclosure. Such a result is unexpected since use of nylon 6 typically produced a product that had higher flammable characteristics.

In an embodiment, nylon 6 can be used as a carrier for one or more additives and/or neat. In an embodiment, nylon 6 can be about 0.1 wt % to 20 wt % based on the total weight of the flame retardant composite. In another embodiment, nylon 6 can be about 5 wt % to 15 wt % based on the total weight of the flame retardant composite. In another embodiment, the nylon 6 can be about 10 wt % to 15 wt % based on the total weight of the flame retardant composite. In another embodiment, nylon 6 can be about 13 wt % based on the total weight of the flame retardant composite.

### Polyamides

The polyamides used in the embodiments of the present disclosure can be synthetic linear or branched polycarbonamides characterized by the presence of recurring carbonamide groups as an integral part of the polymer chain, which are separated from one another by at least two carbon atoms. The polyamides can be obtained from the reactions of diamines and dibasic acids, and have the recurring unit represented by the general formula:

-NHCOR₁COHR₂-

in which R₁ is in alkylene group of at least 2 carbon atoms, preferably from about 2 to about 11 or arylene having at least 6 carbon atoms, preferably from about 6 to about 17 carbon atoms; R₂ is selected from R₁ and aryl groups. Polyamides of the above descriptions are well-known in the art and include, for example, nylon 4/6, nylon 6/6, nylon 6/9, nylon 6/10, nylon 6/12, nylon 11, and nylon 12.

Additional polyamides of the present disclosure can include those formed by polymerization of amino acids and derivatives thereof, for example, lactams. Illustrative of these useful polyamides are nylon 4, nylon 6, nylon 7, nylon 9, nylon 10, and the like.

Polyamides of the present disclosure can include copolyamides, which refer to polyamides including three or more different amide units. Details of the copolyamides and their preparations are described in US 5,422,420.

The copolyamides can be obtained from the known methods. For example, the copolyamides can be made from the condensation reaction of hexamethylene diamine and a mixture of dibasic acids comprising at least one of isophthalic acid, terephthalic acid, 5-sulfoisophthalic acid, and adipic acid.

Another illustrative example of the copolyamide is 2-methylpentamethylenediamine amide units formed from 2-methylpentamethylenediamine (hereafter sometimes referred to as "MPMD") and adipic acid. It can also be formed from the reaction of MPMD with other diacids such as isophthalic acid, terephthalic acid, 5-sulfoisophthalic acid and their corresponding salts.

Any amide-forming additive, including aliphatic, aromatic, and alicyclic diacids and diamines as well as lactams, can also be used to form the other amide units which together with the amide units of MPMD are incorporated into the copolyamides of the present disclosure. Depending on the intended end use of the copolyamides, the mole percentages of both MPMD amide unit and other amide units being added into nylon 6/6 or nylon 6 polymers may be adjusted to less than about 10 to about 30 mole percent of amide units.

In an embodiment, the polyamide can be a homopolymer, copolymer, terpolymer, blends thereof, or mixtures of polymers. Embodiments of polyamide fibers include, but are not limited to, polyhexamethylene adipamide (nylon 6,6); polycaproamide (nylon 6); polyenanthamide (nylon 7); poly(10-aminodecanoic acid) (nylon 10); polydodecanolactam (nylon 12); polytetramethylene adipamide (nylon 4,6); polyhexamethylene sebacamide homopolymer (nylon 6,10); a polyamide of n-dodecanedioic acid and hexamethylenediamine homopolymer (nylon 6,12); and a polyamide of dodecamethylenediamine and n-dodecanedioic acid (nylon 12,12). In addition, the polyamide can be a copolymer polyamide (e.g., a polyamide polymer derived from two or more dissimilar monomers). In an embodiment, the polyamide can include nylon 6/6. In an embodiment, the polyamide can include nylon 6/6 and nylon 6.

In an embodiment, the polyamide can be about 80 wt % to 99.5 wt % based on the total weight of the flame retardant composite. In another embodiment, the polyamide can be about 90 wt % to 99 wt % based on the total weight of the flame retardant composite. In another embodiment, the polyamide can be about 3 wt % to 7 wt % based on the total weight of the flame retardant composite.

In an embodiment, the fiber forming polymer can be about 80 wt % to 99.5 wt % based on the total weight of the flame retardant composite. In another embodiment, the fiber forming polymer can be about 90 wt % to 99 wt % based on the total weight of the flame retardant composite. In another embodiment, the fiber forming polymer can be about 3 wt % to 7 wt % based on the total weight of the flame retardant composite.

### Organoclay

Embodiments of the organoclay can include mineral clays such as smectite-type clay. In an embodiment, the smectite clay is a natural or synthetic clay mineral selected from the group consisting of: aliettite, beidelite, bentonite, hectorite, montmorillonite, nontronite, saponite, sepiolite, stevesite, sauconite, swinefordite, volkonskoite, yakhontovite, zincsilite, and combinations thereof. In an embodiment, the smectite clay can be a natural or synthetic clay mineral selected from the group consisting of: hectorite, montmorillonite, bentonite, beidelite, saponite, stevesite, sepiolite, and mixtures thereof. In one embodiment the mineral clay is montmorillonite.

In an embodiment, the organoclay (smectite clay) can be crushed, grounded, slurried in water, and screened to remove grit and other impurities. In an embodiment, the smectite clay may be converted to sodium form of the smectite clay. The sodium form of the smectite clay can be produced by cationic exchange reaction, or the clay may be converted via an aqueous reaction with a soluble sodium compound. Then, the dilute (e.g., about 1 to 6% solids) aqueous slurry is subjected to high shearing in a Manton-Gaulin mill in which the slurry passes through a narrow gap at a high velocity, and a high pressure differential is maintained. The slurry to be treated may be passed one or more times through the Manton-Gaulin mill.

Following the high shear step, the clay components slurry may be mixed with one another. Alternatively, the two or more clay components can be intermixed into single slurry before the latter is subjected to the high shear step.

The organoclay is normally supplied as a powder after incalating with an intercalating agent that allows the nanoclay to disperse well in a polymer. For example, Southern Clay Products, a subsidiary of Rockwood Specialties, Inc., produces Cloisite 25A, which is a montmorillonite nanoclay intercalated with an Alkyl Quaternary Ammonium compound called 2MHTL8.

The nanoclay powder can then be compounded into concentrate pellets containing about 1 to 40 weight percent of the organoclay and about 60 to 90 weight percent of a carrier. In an embodiment, the carrier can include a nylon such as nylon 6 and/or nylon 6/6. It should also be noted that the carrier may contain minor amounts of compounding agents such as dispersing agents and flow modifiers.

In embodiment of the flame retardant composite that includes nylon 6 as the carrier for the organoclay, nylon 6 can be about 0.01 to 30 weight percent of the flame retardant composite. In another embodiment, nylon 6 can be about 5 to 20 weight percent of the flame retardant composite. In another embodiment, nylon 6 can be about 12 to 14 weight percent of the flame retardant composite.

In an embodiment, the organoclay can be about 0.1 wt % to 4 wt % based on the total weight of the flame retardant composite. In another embodiment, the organoclay can be about 1 wt % to 3 wt % based on the total weight of the flame retardant composite. In another embodiment, the organoclay can be about 1.6 wt % to 2.0 wt % based on the total weight of the flame retardant composite.

### Inorganic Bromine Compound

As noted above, embodiments of the present disclosure include an inorganic bromine compound. The inorganic bromine compound can include, but is not limited to, KBr, NaBr, and LiBr. In an embodiment, the inorganic bromine can be KBr. In an embodiment, potassium in KBr can be replaced by other alkali metals such as, but not limited to, sodium and rubidium. Bromine in KBr can be replaced by other halogens such as chlorine (KCI) and iodide (KI).

In an embodiment, inorganic bromine compound (or a substitute salt as mentioned above) can be about 0.5 wt % to 6 wt % based on the total weight of the flame retardant composite. In another embodiment, inorganic bromine compound can be about 1 wt % to 3 wt % based on the total weight of the flame retardant composite. In another embodiment, inorganic bromine compound can be about 1.8 wt % to 2.2 wt % based on the total weight of the flame retardant composite. In another embodiment, inorganic bromine compound can be about 2 wt % based on the total weight of the flame retardant composite.

In an embodiment, KBr can be about 0.5 wt % to 6 wt % based on the total weight of the flame retardant composite. In another embodiment, KBr can be about 1 wt % to 3 wt % based on the total weight of the flame retardant composite. In another embodiment, KBr can be about 1.8 wt % to 2.2 wt % based on the total weight of the flame retardant composite. In another embodiment, KBr can be about 2 wt % based on the total weight of the flame retardant composite.

### Zinc Borate

As noted above, embodiments of the present disclosure can include zinc borate (*e*.*g*., Zn₃(BO₃)₂). It should be noted that zinc borate can be replaced in the composition by other compounds that play a similar role (*e*.*g*., water release, char support, and the like) as zinc borate in the flame retardant composite. In an embodiment, the other compounds can include, but are not limited to, zinc stearate, magnesium stearate, ammonium octamolybdate, zinc stannate, zinc hydrostannate, barium borate, ammonium fluoroborate, barium metaborate, and aluminum trihydrate.

Zinc borate is normally supplied as a concentrate pellet containing about 5 to 30 weight percent of zinc borate and about 95 to 70 weight percent of a carrier. In an embodiment, the carrier can be a polyamide (*e*.*g*., nylon 6 or nylon 6/6 or mixture thereof) and can also include minor amounts of compounding acids such as dispersing agents and flow modifiers.

The zinc borate or other compound can be about 0.5 wt % to 6 wt % based on the total weight of the flame retardant composite. In one embodiment, zinc borate can be about 1 wt % to 3 wt % based on the total weight of the flame retardant composite. In another embodiment, zinc borate can be about 1.8 wt % to 2.2 wt % based on the total weight of the flame retardant composite.

### Methods of preparation

Embodiments of the flame retardant composite may be prepared using melt processing techniques. Typically, the melt processing involves subjecting constituent components of the flame retardant composite to intimate mixing at a temperature of about 200 °C to 320 °C. Melting processing in an extruder is preferred. The concentrate pellets of additives such as organoclay, KBr, and/or zinc borate, and the base polyamide chip are then metered into the feed section of a screw extruder. Typically, the concentrate pellets of additives and base polyamide are fed into the extruder though a gravimetric or volumetric feeder although one or more of the concentrates may also be added via injection into the melt with a separate smaller extruder either in the extruder or downstream of the extruder. Those skilled in the art can determine the best carriers and concentrations for their applications as well as the best methods of addition.

As mentioned above, embodiments of the present disclosure provide for flame retardant nylon fibers made from flame retardant composite using a screw melting, and spinning process known to the ordinary person skills in the art.

Embodiments of the present disclosure include provide for flame retardant carpets that retain not only their aesthetics via long wear life but also significant flame retardant properties.

Embodiments of the flame retardant nylon carpet can be manufactured using any techniques known in the art. The carpets include tufted carpets with cut piles or loop piles, woven carpets, needle felt, non-woven and knitted carpets. The process of making tufted carpets described here is just an example to illustrate the application of new flame retardant polyamide fibers in the carpets manufacture.

The basic manufacturing approach to the commercial production of tufted carpet is to start with a woven scrim or a primary carpet backing, and feed it into a tufting machine or a loom. The carpet face yarn is needled through and embedded in the primary carpet backing thus forming a carpet precursor or base. Upstanding loops on the upper side of the carpet may be cut to produce cut pile carpet. The tufted carpet is typically backed with an adhesive lock coat in order to secure the face yarn to the primary backing. If desired, a secondary backing may be bonded to the undersurface of the primary backing.

Primary backings for tufted pile carpets are typically woven or non-woven fabrics made of one or more natural or synthetic fibers or yarns, such as jute, wool, polypropylene, polyethylene, polyamides, polyesters, ethylene-propylene copolymers, nylon and rayon. Secondary backings for tufted pile carpets are typically woven or non-woven fabrics made of one ore more natural or synthetic fibers or yarns.

An adhesive is typically used in the adhesive lockcoat. In an embodiment, ethylene vinyl acetate (EVA) can be used to meet fire protection requirement for carpets.

### Testing Methods

### FAA Vertical Burn Test - FAR 25.853 Appendix F, Part 1, 12 Seconds

A minimum of three carpet samples were tested and results were averaged. Each sample was supported vertically. The sample was exposed to a Bunsen burner with a normal 3/8-inch I.D. tube adjusted to give a flame of 11/2 inches in height. The minimum flame temperature measured by a calibrated thermocouple pyrometer in the center of the flame was 843 °C. The lower edge of the sample was ¾-inch above the top edge of the burner. The flame was applied to the center line of the lower edge of the sample. The flame was applied for 12 seconds and then removed. Flame time, burn length, and flame time of drippings were recorded.

### Smoke Emission/Obscuration Performance - ASTM F 814 (JAR 25.853 App F, Part V), BSS 7238, ABD 0031

The most widely used test method for non-metallic parts inside airliner passenger compartments is the NBS smoke box type method. A small sample of carpet is exposed to a radiant panel and a row of flames, and the smoke generated in the non-flaming and flaming modes is measured using a photometric system. Airliner manufacturers such as Airbus and Boeing use a slightly modified version of this NBS smoke box type method. An example of test requirements are a of Ds max at 4 minutes < 200, as specified by Boeing (BMS 8-237), and Dₘ max at 4 minutes < 250 as specified by Airbus Industries (ABD 0031).

### Toxic Gas Performance - PREN 2824, 2825, 2826, BSS 7239, ABD 0031.

The basic apparatus used for the evaluation of smoke emission is the NBS Smoke Density Chamber. Gas samples are extracted from the test chamber and analyzed by means of calorimetric gas detection (Draeger) tubes. Specifications are based on the maximum allowable gas concentration for a range of specified gases. The test method is described in Airbus Industries specification AITM 3.0005 and Boeing Standard BSS 7239, the specifications being given in ABD 0031 and the appropriate Boeing material specification BMS 8-237.

Carpets are tested in both flaming and non-flaming mode. Requirements for both modes are similar. Typical minimum requirements are (after 4 minutes) (in ppm):
HF < 100 (Airbus) < 200 (Boeing) CO < 3500
HC1 < 150 (Airbus) < 500 (Boeing) NO/NO₂ < 100
HCN < 150 plus report any other toxic gases detected
SO₂/H₂S < 100

### Examples

### Example 1 (Comparative Sample A)

A nylon 6/6 polymer chip was extruded through the spinneret and divided into four 80 filaments. The molten filaments were then rapidly quenched in a chimney, where cooling air at 20 °C was blown past the filaments at 300 cubic feet/min (0.236 cubic m/sec). The filaments were pulled by a feed roll rotating at a surface speed of 1000 yard/min (914 m/min) through the quench zone and then were coated with a lubricant for drawing and crimping. The coated yarns were drawn at 2650 yards/min (2423 m/min) (2.65 X draw ratio) using a pair of heated (175 °C) draw rolls. The yarns were then forwarded into a bulking jet (204 °C hot air), similar to that describe in Coon, U.S. Pat. No. 3,525,134 to form 1400 denier with 80 filaments. These were wound on a package for further processing. Four ends were piled and twisted with 2 ends S-Twist and 2 ends Z-Twist for a total denier 5600. The yarns were then woven into a carpet using a glass fiber warp. A backing of ethylene vinyl acetate (EVA) was employed. The EVA backing contained alumina trihydrate (ATH) and red phosphorous (RP). The carpet was then subjected to vertical flame, smoke, and toxicity tests.

### Example 2 (Sample B)

Organoclay used in this and the following examples were Cloisite® 25A. Cloisite® 25 A was made by Southern Clay Products, Inc. Cloisite® 25A was compounded into a mixture of nylon 6/6 and compounding aids at concentration 20 wt% to form a concentrate. The concentrate was then formed into Pellet A. Pellet A along with nylon 6/6 polymer chips were fed into an extruder through a multiple feeder. The concentration of Cloisite® 25A in the flame retardant polymer composites are listed in Table 1. The production of yarns and carpet were the same as described in Example 1. The carpet was then subjected to vertical flame, smoke, and toxicity tests.

### Example 3 (Sample C)

KBr was compounded into a mixture of nylon 6/6 and compounding acids to form a concentrate. The concentrate was then formed into Pellet B. Pellets A and C along with nylon 6/6 polymer chips were fed into an extruder through a multiple feeder. The concentrations of KBr in the flame retardant polymer composites are listed in Table 1. The production of yarns and carpet were the same as described in Example 1. The carpet was then subjected to vertical flame, smoke, and toxicity tests.

### Example 4 (Sample D)

Pellets A and B were made using the same procedure described in Example 2. Pellets A and B along with nylon 6/6 polymer chips were fed into an extruder through a multiple feeder. The concentrations of Cloisite® 25A and KBr in the flame retardant polymer composites are listed in Table 1. The production of yarns and carpet were the same as described in Example 1. The carpet was then subjected to vertical flame, smoke, and toxicity tests.

### Example 4 (Sample E)

Sample E was produced using the same procedure described in Example 4 except nylon 6 was added as the carrier. The total loading of nylon 6 is 13.5 wt% based on the weight of the fiber. The concentrations of Cloisite® 25A, KBr, and nylon 6 in the flame retardant polymer composites are listed in Table 1. The production of yarns and carpet were the same as described in Example 1. The carpet was then subjected to vertical flame, smoke, and toxicity tests.

**Table 1. Compositions of Flame Retardant Polymer Composite**

| Item | Total Wt% Nylon 6 | Cloisite® 25A 20% in Nylon 6/6 | KBr 30.4 in Nylon 6/6 |
|---|---|---|---|
| | 0 | 0.0% | 0.0% |
| | 0 | 1.8% | 0% |
| | 0 | 0% | 2% |
| | 0 | 1.8% | 2% |
| | 13.1% | 1.8% | 2% |

It should be noted that ratios, concentrations, amounts, and other numerical data may be expressed herein in a range format. It is to be understood that such a range format is used for convenience and brevity, and thus, should be interpreted in a flexible manner to include not only the numerical values explicitly recited as the limits of the range, but also to include all the individual numerical values or sub-ranges encompassed within that range as if each numerical value and sub-range is explicitly recited. To illustrate, a concentration range of "about 0.1 % to about 5%" should be interpreted to include not only the explicitly recited concentration of about 0.1 wt% to about 5 wt%, but also include individual concentrations (e.g., 1%, 2%, 3%, and 4%) and the sub-ranges (e.g., 0.5%, 1.1%, 2.2%, 3.3%, and 4.4%) within the indicated range. The term "about" can include ±1%, ±2%, ±3%, ±4%, ±5%, ±6%, ±7%, ±8%, ±9%, or ±10%, or more of the numerical value(s) being modified. In addition, the phrase "about 'x' to 'y'" includes "about 'x' to about 'y"'. The term "consisting essentially of" is defined to include a formulation that includes the components specifically mentioned as well as supplemental components (e.g., antioxidants, catalysts, antistatic fibers, and other additives) used in a flame retardant composite, flame retardant nylon fiber, flame retardant nylon fiber carpet, while not including other compounds not specifically mentioned in the formulation.

The scope of the invention is defined by the following claims.

## Claims

1. A flame retardant composite, a flame retardant nylon fiber or a flame retardant nylon fiber carpet, comprising, or consisting essentially of:
a polyamide,
an organoclay composition, and
an inorganic bromine compound; wherein the polyamide is one or more nylons selected from the group consisting of: nylon 4/6, nylon 6, nylon 6/6, nylon 6/9, nylon 6/10, nylon 6/12, nylon 11, and nylon 12.

2. The composite, fiber, or carpet of claim 1, wherein the polyamide is nylon 6/6.

3. The composite, fiber, or carpet of claim 1, wherein the polyamide includes a first nylon and a second nylon, wherein the first nylon is 6/6 and the second nylon is nylon 6.

4. The composite of claim 1, wherein the organoclay composition is about 0.01 to 2.5 weight % of the flame retardant composite, and wherein the inorganic bromine compound is about 0.01 to 2.5 weight % of the flame retardant composite.

5. The composite of claim 1, wherein the organoclay composition is about 1.6 to 2 weigh % of the composite, and wherein the inorganic bromine compound is about 1.8 to 2.2 weight % of the flame retardant composite.

6. The composite of claim 1, wherein the organoclay composition is about 1.6 to 2 weight % of the composite, and wherein the inorganic bromine compound is about 1.8 to 2.2 weight % of the flame retardant composite.

7. The composite of claim 1, wherein the organoclay composition is about 1.8 weight % of the composite, and wherein the inorganic bromine compound is about 2 weight % of the flame retardant.

8. The composite of claim 1, further comprising nylon 6, wherein nylon 6 is about 0.01 to 30 weight % of the flame retardant composite.

9. The composite of claim 1, further comprising nylon 6, wherein nylon 6 is about 5 to 20 weight % of the flame retardant composite.

10. The composite of claim 1, further comprising nylon 6, wherein nylon 6 is about 13 weight % of the flame retardant composite.

11. The fiber of claim 1, wherein the fiber is made from one of the flame retardant composites of claims 4-10.

12. The composite, fiber, or carpet of claim 1, wherein the organoclay composition is a mineral clay, preferably the mineral clay is selected from the group consisting of: hectorite, montmorillonite, bentonite, beidelite, saponite, stevensite, and mixtures thereof, more preferably the mineral clay is montmorillonite.

13. The composite, fiber, or carpet of claim 1, wherein the inorganic bromine compound is selected from the group consisting of:KBr, NaBr, RbBr, and LiBr, preferably the inorganic bromine compound is KBr.

14. The composite, fiber, or carpet of claim 1, further comprising an additive selected from the group consisting of: zinc stearate, magnesium stearate, ammonium octamolybdate, zinc stannate, zinc hydrostannate, barium borate, ammonium fluoroborate, barium metaborate, and aluminium trihydrate.

15. The composite, fiber, or carpet of claim 1, further comprising an additive, wherein the additive is ZnB.

## Patentansprüche

1. Flammhemmender Verbundstoff, flammhemmende Nylonfaser oder flammhemmender Nylonfaserteppich, umfassend oder im Wesentlichen bestehend aus:
einem Polyamid,
einer Organotonzusammensetzung und
einer anorganischen Bromverbindung; wobei das Polyamid ein oder mehrere Nylons ist ausgewählt aus der Gruppe bestehend aus: Nylon 4,6, Nylon 6, Nylon 6,6, Nylon 6,9, Nylon 6,10, Nylon 6,12, Nylon 11 und Nylon 12.

2. Verbundstoff, Faser oder Teppich nach Anspruch 1, wobei das Polyamid Nylon 6,6 ist.

3. Verbundstoff, Faser oder Teppich nach Anspruch 1, wobei das Polyamid ein erstes Nylon und ein zweites Nylon umfasst, wobei das erste Nylon Nylon 6,6 und das zweite Nylon Nylon 6 ist.

4. Verbundstoff nach Anspruch 1, wobei die Organotonzusammensetzung etwa 0,01 bis 2,5 Gew.% des flammhemmenden Verbundstoffs ausmacht und wobei die anorganische Bromverbindung etwa 0,01 bis 2,5 Gew.-% des flammhemmenden Verbundstoffs ausmacht.

5. Verbundstoff nach Anspruch 1, wobei die Organotonzusammensetzung etwa 1,6 bis 2 Gew.-% des Verbundstoffs ausmacht und wobei die anorganische Bromverbindung etwa 1,8 bis 2,2 Gew.-% des flammhemmenden Verbundstoffs ausmacht.

6. Verbundstoff nach Anspruch 1, wobei die Organotonzusammensetzung etwa 1,6 bis 2 Gew.-% des Verbundstoffs ausmacht und wobei die anorganische Bromverbindung etwa 1,8 bis 2,2 Gew.-% des flammhemmenden Verbundstoffs ausmacht.

7. Verbundstoff nach Anspruch 1, wobei die Organotonzusammensetzung etwa 1,8 Gew.-% des Verbundstoffs ausmacht und wobei die anorganische Bromverbindung etwa 2 Gew.-% des Flammhemmungsmittels ausmacht.

8. Verbundstoff nach Anspruch 1, des Weiteren Nylon 6 umfassend, wobei Nylon 6 etwa 0,01 bis 30 Gew.-% des flammhemmenden Verbundstoffs ausmacht.

9. Verbundstoff nach Anspruch 1, des Weiteren Nylon 6 umfassend, wobei Nylon 6 etwa 5 bis 20 Gew.% des flammhemmenden Verbundstoffs ausmacht.

10. Verbundstoff nach Anspruch 1, des Weiteren Nylon 6 umfassend, wobei Nylon 6 etwa 13 Gew.-% des flammhemmenden Verbundstoffs ausmacht.

11. Faser nach Anspruch 1, wobei die Faser aus einem der flammhemmenden Verbundstoffe nach den Ansprüchen 4 - 10 hergestellt ist.

12. Verbundstoff, Faser oder Teppich nach Anspruch 1, wobei die Organotonzusammensetzung ein Mineralton ist, der Mineralton bevorzugt aus der Gruppe ausgewählt ist bestehend aus: Hectorit, Montmorillonit, Bentonit, Beidelit, Saponit, Stevensit und Mischungen davon, der Mineralton noch bevorzugter Montmorillonit ist.

13. Verbundstoff, Faser oder Teppich nach Anspruch 1, wobei die anorganische Bromverbindung aus der Gruppe ausgewählt ist bestehend aus: KBr, NaBr, RbBr und LiBr, die organische Bromverbindung bevorzugt KBr ist.

14. Verbundstoff, Faser oder Teppich nach Anspruch 1, des Weiteren ein Zusatzmittel umfassend ausgewählt aus der Gruppe bestehend aus: Zinkstearat, Magnesiumstearat, Ammoniumoctamolybdat, Zinkstannat, Zinkhydrostannat, Bariumborat, Ammoniumfluorborat, Bariummetaborat und Aluminiumtrihydat.

15. Verbundstoff, Faser oder Teppich nach Anspruch 1, des Weiteren ein Zusatzmittel umfassend, wobei das Zusatzmittel ZnB ist.

## Revendications

1. Composite ignifuge, fibre de nylon ignifuge ou tapis en fibres de nylon ignifuge, comprenant, ou essentiellement constitué de:
un polyamide,
une composition d'argile riche en matière organique, et
un composé de brome inorganique; dans lequel le polyamide est un ou plusieurs nylon(s) sélectionné(s) parmi le groupe constitué du: nylon 4/6, nylon 6, nylon 6/6, nylon 6/9, nylon 6/10, nylon 6/12, nylon 11, et nylon 12.

2. Composite, fibre ou tapis selon la revendication 1, dans lequel(laquelle) le polyamide est le nylon 6/6.

3. Composite, fibre ou tapis selon la revendication 1, dans lequel(laquelle) le polyamide comprend un premier nylon et un second nylon, dans lequel(laquelle) le premier nylon est le nylon 6/6 et le second nylon est le nylon 6.

4. Composite selon la revendication 1, dans lequel la composition d'argile riche en matière organique représente environ 0,01 à 2,5 % en poids du composite ignifuge, et dans lequel le composé de brome inorganique représente environ 0,01 à 2,5 % en poids du composite ignifuge.

5. Composite selon la revendication 1, dans lequel la composition d'argile riche en matière organique représente environ 1,6 à 2 % en poids du composite, et dans lequel le composé de brome inorganique représente environ 1,8 à 2,2 % en poids du composite ignifuge.

6. Composite selon la revendication 1, dans lequel la composition d'argile riche en matière organique représente environ 1,6 à 2 % en poids du composite, et dans lequel le composé de brome inorganique représente environ 1,8 à 2,2 % en poids du composite ignifuge.

7. Composite selon la revendication 1, dans lequel la composition d'argile riche en matière organique représente environ 1,8 % en poids du composite, et dans lequel le composé de brome inorganique représente environ 2 % en poids de l'agent ignifuge.

8. Composite selon la revendication 1, comprenant en outre du nylon 6, dans lequel le nylon 6 représente environ 0,01 à 30 % en poids du composite ignifuge.

9. Composite selon la revendication 1, comprenant en outre du nylon 6, dans lequel le nylon 6 représente environ 5 à 20 % en poids du composite ignifuge.

10. Composite selon la revendication 1, comprenant en outre du nylon 6, dans lequel le nylon 6 représente environ 13 % en poids du composite ignifuge.

11. Fibre selon la revendication 1, dans laquelle la fibre est constituée de l'un des composites ignifuges selon les revendications 4 à 10.

12. Composite, fibre ou tapis selon la revendication 1, dans lequel(laquelle) la composition d'argile riche en matière organique est une argile minérale, de préférence l'argile organique est sélectionnée parmi le groupe constitué de: l'hectorite, la montmorillonite, la bentonite, la béidélite, la saponite, la stévensite, et leurs mélanges, plus préférablement l'argile minérale est la montmorillonite.

13. Composite, fibre ou tapis selon la revendication 1, dans lequel(laquelle) le composé de brome inorganique est sélectionné parmi le groupe constitué de: KBr, NaBr, RbBr, et LiBr, de préférence le composé de brome inorganique est KBr.

14. Composite, fibre ou tapis selon la revendication 1, comprenant en outre un additif sélectionné parmi le groupe constitué du: stéarate de zinc, stéarate de magnésium, octamolybdate d'ammonium, stannate de zinc, hydrostannate de zinc, borate de baryum, fluoroborate d'ammonium, métaborate de baryum, et de l'aluminium trihydraté.

15. Composite, fibre ou tapis selon la revendication 1, comprenant en outre un additif, dans lequel l'additif est ZnB.
